# EUROPEAN PATENT APPLICATION

(11) **EP 3 574 770 A1**
(43) Date of publication of application: **04.12.2019**
(21) Application number: 18174986.2
(22) Date of filing: 30.05.2018
(51) Int. Cl.: A23L 33/15, A23L 33/155, A23L 33/175

(54) **AMINO ACID-CONTAINING COMPOSITION**

(71) Applicant: AJINOMOTO CO., INC., Chuo-ku Tokyo 104-8315 (JP)
(72) Inventor: MURAKAMI, Hitoshi, Tokyo, 104-8315 (JP); HONDA, Masashi, Tokyo, 104-8315 (JP); TAKAHASHI, Yusuke, Tokyo, 104-8315 (JP)
(74) Representative: Strehl Schübel-Hopf & Partner

(57) **Abstract**

An amino acid-containing composition comprising lysine or a salt thereof, methionine or a salt thereof, glutamine or a salt thereof and proline or a salt thereof at the following concentrations and iron, zinc, Vitamin C and Vitamin A:
lysine or a salt thereof: 0.25 - 75 wt%,
methionine or a salt thereof: 0.025 - 75 wt%,
glutamine or a salt thereof: 0.25 - 75 wt%,
proline or a salt thereof: 0.25 - 75 wt%.

The composition can improve malnutrition, acute malnutrition or anemia, particularly acute malnutrition or anemia in infants, by ingestion in combination with grain.

## Description

### TECHNICAL FIELD OF THE INVENTION

The present invention relates to an amino acid-containing composition characteristically comprising lysine or a salt thereof, methionine or a salt thereof, glutamine or a salt thereof, and proline or a salt thereof as an amino acid, and iron, zinc, Vitamin C and Vitamin A. More particularly, the present invention relates to an amino acid-containing composition capable of providing sufficient protein/amino acid nutrition when be ingested in combination with grains, a high improvement effect for malnutrition and/or a high improvement effect for anemia symptoms and the like.

### BACKGROUND OF THE INVENTION

In the world, about one billion people are suffering from starvation and malnutrition, and around death of 3 million children under 5 years old annually are attributable to malnutrition.

In recent years, Lipid-based-nutrient supplements (LNS) such as Ready-to-Use Therapeutic Food (RUTF) and Ready-to- Use Supplementary Foods (RUSF) are used to improve acute malnutrition. RUTF represented by "Plumpy' nut" (trade name) is used for the treatment of severe acute malnourished children (WO 2005/096837 A2 etc.), and RUSF is used for the treatment of moderate acute malnourished children. LNS are characterized in that (1) they have high nutritional value, (2) they do not require cooking for ingestion, (3) they are easily ingested even without water, (4) they are individually sealed with aluminum packaging etc., hygienic and easy to distribute, (5) they can be preserved for a long period even at high temperature, and the like, and affording significant results in nutritional treatment and nutritional support of malnourished children and the like.

While current LNS such as the aforementioned "Plumpy'nut", "Plumpy'sup" contains dried skim milk as one of the main ingredients, milk and other animal-derived materials are very expensive and often imported in the developing regions where many malnourished patients live. In those areas, therefore, such foods are considered to be unsuitable for eating habits and food culture in the areas, since the production of such foods is limited, they are mostly imported from developed countries, and people in those areas have fewer experience of eating such foods compared to cereals.

The current LNS contains a large amount of peanut. Peanuts are more frequently contaminated with aflatoxin than other plant-derived materials. Aflatoxin is known to be highly carcinogenic and to inhibit nutrient absorption. Therefore, using peanut as a raw material for nutritional food or nutritional treatment food is highly risky.

If the LNS can be produced from ingredients produced in developing regions with many malnourished patients as starting materials, RUTFs can be provided at a low cost in a timely manner when needed even in such areas, and further, stimulation of the area's economy can also be expected.

When producing RUTF from ingredients produced in developing regions with many malnourished patients as starting materials, it is advantageous to prepare, in advance, an amino acid-containing composition containing predetermined amino acid and mineral admixed therein (hereinafter sometimes to be also referred to as a premix), and administer (ingest) same as necessary in combination with the starting material.

### SUMMARY OF THE INVENTION

The present invention has been made in view of the aforementioned situation and aims to provide an amino acid-containing composition capable of providing sufficient protein/amino acid nutrition when be ingested in combination with grains, particularly ingredients produced in developing regions with many malnourished patients as starting materials (soybean, maize, sorghum etc.), a high improvement effect for malnutrition, particularly acute malnutrition and/or a high improvement effect for anemia symptoms and the like.

The present inventors have conducted intensive studies in an attempt to solve the aforementioned problems and found that symptoms such as malnutrition, anemia and the like can be effectively improved by ingesting an amino acid-containing composition containing a particular amino acid and a particular trace component in combination with the grain. Based on such finding, they have conducted further studies and completed the present invention.

Therefore, the present invention provides the following.
[1] An amino acid-containing composition comprising lysine or a salt thereof, methionine or a salt thereof, glutamine or a salt thereof and proline or a salt thereof at the following concentrations and iron, zinc, Vitamin C and Vitamin A:
   lysine or a salt thereof: 0.25 - 75 wt%,
   methionine or a salt thereof: 0.025 - 75 wt%,
   glutamine or a salt thereof: 0.25 - 75 wt%,
   proline or a salt thereof: 0.25 - 75 wt%.
[2] The amino acid-containing composition of the above-mentioned [1], further comprising glycine or a salt thereof at the following concentration:
   glycine or a salt thereof: 0.025 - 75 wt%.
[3] The amino acid-containing composition of the above-mentioned [1] or [2], wherein the iron, zinc, Vitamin C and Vitamin A are contained at the following concentrations:
   iron: 0.2 - 1 wt%
   zinc: 0.2 - 0.8 wt%
   Vitamin C: 2 - 20 wt%
   Vitamin A: 0.01 - 0.1 wt%.
[4] The amino acid-containing composition of any of the above-mentioned [1] to [3] for ingestion in combination with grain.
[5] The amino acid-containing composition of the above-mentioned [4], wherein the grain is used in an amount of 6 - 15 parts by weight per 1 part by weight of the composition.
[6] The amino acid-containing composition of the above-mentioned [4] or [5], wherein the grain comprises at least one kind selected from the group consisting of soybean, maize and sorghum.
[7] The amino acid-containing composition of any of the above-mentioned [4] to [6], wherein the grain comprises soybean, maize and sorghum.
[8] The amino acid-containing composition of any of the above-mentioned [1] to [7] for the prophylaxis or improvement of malnutrition in infants.
[9] The amino acid-containing composition of the above-mentioned [8], wherein the malnutrition is acute malnutrition.
[10] The amino acid-containing composition of the above-mentioned [8] or [9], wherein the malnutrition is accompanied by anemia.
[11] The amino acid-containing composition of any of the above-mentioned [1] to [7] for the prophylaxis or improvement of anemia symptoms.
[12] The amino acid-containing composition of any of the above-mentioned [1] to [7] for use in the prophylaxis or improvement of malnutrition in infants.
[13] The amino acid-containing composition of the above-mentioned [12], wherein the malnutrition is acute malnutrition.
[14] The amino acid-containing composition of the above-mentioned [12] or [13], wherein the malnutrition is accompanied by anemia.
[15] The amino acid-containing composition of any of the above-mentioned [1] to [7] for use in the prophylaxis or improvement of anemia symptoms.

The amino acid-containing composition of the present invention can improve malnutrition and/or anemia symptoms in developing regions with many malnourished patients effectively at a low cost by administering (ingesting) the composition in combination with ingredients produced in said developing regions (grains such as soybean, maize, sorghum and the like) as the main starting material.

### BRIEF DESCRIPTION OF THE DRAWINGS

Fig. 1 is a graph showing the recovery rate after ingestion of a test food in a human test.
Fig. 2 is a graph showing the amount of change in blood hemoglobin level before the start of the test and after the completion of the test in a human test.

### DESCRIPTION OF EMBODIMENTS

The amino acid-containing composition of the present invention comprises lysine or a salt thereof, methionine or a salt thereof, glutamine or a salt thereof, and proline or a salt thereof at the following concentrations, and also comprises iron, zinc, Vitamin C and Vitamin A:
lysine or a salt thereof: 0.25 - 75 wt%,
methionine or a salt thereof: 0.025 - 75 wt%,
glutamine or a salt thereof: 0.25 - 75 wt%,
proline or a salt thereof: 0.25 - 75 wt%.

Preferably, the amino acid-containing composition of the present invention further comprises glycine or a salt thereof at the following concentration:
glycine or a salt thereof: 0.025 - 75 wt%.

In the amino acid-containing composition of the present invention, the contents of iron, zinc, Vitamin C and Vitamin A are not particularly limited as long as they are contained as trace components and provide a desired effect. Preferably, respective components are contained at the following concentrations:
iron: 0.2 - 1 wt%
zinc: 0.2 - 0.8 wt%
Vitamin C: 2 - 20 wt%
Vitamin A: 0.01 - 0.1 wt%.

Lysine, glutamine, methionine, proline, glycine and salts thereof to be used in the present invention can be obtained by extraction and purification from naturally occurring animals and plants, or obtained by chemical synthesis method, fermentation method, enzymatic method or gene recombination method. Lysine, glutamine, methionine, proline, glycine and salts thereof to be used in the present invention may be in any of L-, D- and DL-forms, preferably L-form.

The salts of lysine, glutamine, methionine, proline and glycine to be used in the present invention are preferably pharmacologically acceptable salts and, for example, salts with inorganic acids, salts with organic acids, salts with inorganic bases, salts with organic bases and the like can be mentioned.

Examples of the salts with inorganic acids include salts with hydrohalic acid (hydrochloric acid, hydrobromic acid, hydroiodic acid etc.), sulfuric acid, nitric acid, phosphoric acid or the like.

Examples of the salts with organic acids include salts with formic acid, acetic acid, propionic acid, oxalic acid, succinic acid, maleic acid, fumaric acid, citric acid or the like.

Examples of the salts with inorganic bases include salts with alkali metals such as sodium, potassium, lithium and the like, salts with alkaline earth metals such as calcium, magnesium and the like, salt with ammonium and the like.

Examples of the salts with organic bases include salts with ethylenediamine, propylenediamine, ethanolamine, monoalkylethanolamine, dialkylethanolamine, diethanolamine, triethanolamine or the like.

The content of lysine or a salt thereof in the amino acid-containing composition of the present invention is generally 0.25 - 75 wt% relative to the composition of the present invention and, from the aspect of protein/amino acid nutrition, preferably 2.5 - 12.5 wt%, more preferably 6.25 - 10.5 wt%.

The calculation of the amount of amino acid salt in the present invention is based on a free form.

The content of glutamine or a salt thereof in the amino acid-containing composition of the present invention is generally 0.25 - 75 wt% relative to the composition of the present invention and, from the aspect of protein/amino acid nutrition, preferably 2.5 - 20 wt%, more preferably 7.5 - 15 wt%.

The calculation of the amount of amino acid salt in the present invention is based on a free form.

The weight ratio of the content of lysine or a salt thereof and the content of glutamine or a salt thereof (lysine or a salt thereof: glutamine or a salt thereof) is preferably 1:0.2 - 8, more preferably 1:0.8 - 2, from the aspect of protein/amino acid nutrition.

The content of methionine or a salt thereof in the amino acid-containing composition of the present invention is generally 0.025 - 75 wt% relative to the composition of the present invention and, from the aspect of protein/amino acid nutrition, preferably 0.25 - 7.5 wt%, more preferably 1.25 - 5 wt%.

The calculation of the amount of amino acid salt in the present invention is based on a free form.

The weight ratio of the content of lysine or a salt thereof and the content of methionine or a salt thereof (lysine or a salt thereof: methionine or a salt thereof) in the composition of the present invention is preferably 1:0.02 - 3, more preferably 1:0.1 - 0.7, from the aspect of protein/amino acid nutrition.

The content of proline or a salt thereof in the amino acid-containing composition of the present invention is generally 0.25 - 75 wt% relative to the composition of the present invention and, from the aspect of protein/amino acid nutrition, preferably 5 - 20 wt%, more preferably 7.5 - 20 wt%.

The calculation of the amount of amino acid salt in the present invention is based on a free form.

The weight ratio of the content of lysine or a salt thereof and the content of proline or a salt thereof (lysine or a salt thereof: proline or a salt thereof) in the composition of the present invention is preferably 1:0.4 - 8, more preferably 1:0.75 - 2.7, from the aspect of protein/amino acid nutrition.

When the amino acid-containing composition of the present invention contains glycine or a salt thereof, the content of glycine or a salt thereof in the composition of the present invention is generally 0.025 - 75 wt% relative to the composition of the present invention and, from the aspect of protein/amino acid nutrition, preferably 0.25 - 7.5 wt%, more preferably 1.25 - 5 wt%.

The calculation of the amount of amino acid salt in the present invention is based on a free form.

When the amino acid-containing composition of the present invention contains glycine or a salt thereof, the weight ratio of the content of lysine or a salt thereof and the content of glycine or a salt thereof (lysine or a salt thereof: glycine or a salt thereof) in the composition of the present invention is preferably 1:0.02 - 3, more preferably 1:0.1 - 0.7, from the aspect of protein/amino acid nutrition.

The content of iron in the amino acid-containing composition of the present invention is generally 0.2 - 1 wt% relative to the composition of the present invention, from the aspect of the recovery effect from anemia, preferably 0.4 - 0.8 wt%, more preferably 0.5 - 0.6 wt%. The iron source is not particularly limited, and iron sulfate, ferrous chloride, ferric chloride, iron gluconate and the like can be mentioned. The amount of iron in the present invention is calculated in terms of iron ion.

The content of zinc in the amino acid-containing composition of the present invention is generally 0.2 - 0.8 wt% relative to the composition of the present invention, from the aspect of the recovery effect from anemia, preferably 0.3 - 0.6 wt%, more preferably 0.4 - 0.5 wt%. While the zinc source is not particularly limited, zinc sulfate, zinc chloride, zinc gluconate, zinc lactate, zinc acetate and the like can be mentioned. The amount of zinc in the present invention is calculated in terms of zinc ion.

The content of Vitamin C in the amino acid-containing composition of the present invention is generally 1 - 20 wt% relative to the composition of the present invention, from the aspect of the nutrition improvement effect, preferably 2 - 12 wt%, more preferably 4 - 10 wt%. While the Vitamin C source is not particularly limited, ascorbic acid and a salt thereof can be mentioned. As the salt, those similar to the pharmacologically acceptable salts exemplified as the salt of the above-mentioned lysine and the like can be used. The amount of salt of Vitamin C in the present invention is calculated in terms of a free form.

The content of Vitamin A in the amino acid-containing composition of the present invention is generally 0.01 - 0.1 wt%, preferably 0.02 - 0.05 wt%, more preferably 0.02 - 0.03 wt%, relative to the composition of the present invention, from the aspect of the nutrition improvement effect. While the Vitamin A source is not particularly limited, retinol (terminal structure is alcohol), retinal (terminal structure is aldehyde), retinoic acid (terminal structure is carboxylic acid) and a salt thereof can be mentioned, with preference given to retinol and a salt thereof. As the salt, those similar to the pharmacologically acceptable salts exemplified as the salt of the above-mentioned lysine and the like can be used. The amount of salt of Vitamin A in the present invention is calculated in terms of a free form.

The amino acid-containing composition of the present invention is preferable ingested in combination with grain in expectation of a high improvement effect on malnutrition, particularly acute malnutrition, and/or a high improvement effect on anemia symptoms and the like. While the grain is not particularly limited, it is preferably an ingredient produced in developing regions with many malnourished patients, and can be appropriately selected according to the area where it is provided. Specifically, beans such as soy bean, chickpea, lenti, kidney bean, peanut and the like; family of wheat such as barley, rye and the like; rice, millet, teff and the like; maize, sorghum, quinoa and the like; tubers and roots such as cassava, taro and the like can be mentioned. At least one grain selected from these grains is used. Preferably, the amino acid-containing composition of the present invention is ingested in combination with grains containing soybean, maize and sorghum.

Soybean used in the present invention is a seed (including dried product) of a plant of Order: Fabales, Family: Fabaceae, Genus: Glycine. Defatted soybean obtained by extracting oil from the seed or a processed product thereof (e.g., soybean protein etc.) may also be used.

When the grain used in the present invention contains soybean, the content of soybean in the grain used in the present invention is generally 30 - 100 wt% relative to the grain used in the present invention and, from the aspects of nutrition composition, property and easiness of eating, preferably 34 - 90 wt%, more preferably 46 - 76 wt%. In the present invention, the weight of soybean, maize and sorghum is a dry weight unless particularly specified.

The maize used in the present invention is a fruit (including dried product) of a plant of Order: Poales, Family: Poaceae, Genus: Zea.

When the grain used in the present invention contains maize, the content of maize in the grain of the present invention is generally 2 - 20 wt% relative to the grain used in the present invention and, from the aspects of nutrition composition, property and easiness of eating, preferably 10 - 14 wt%, more preferably 10.4 - 13.6 wt%.

When the grain used in the present invention contains soybean and maize, the weight ratio of the content of soybean and the content of maize (soybean:maize) in the grain used in the present invention is preferably 1:0.05 - 0.7, more preferably 1:0.1 - 0.3, from the aspects of nutrition composition, property and easiness of eating.

Sorghum used in the present invention is a fruit (including dried product) of a plant of Order: Poales, Family: Poaceae, Genus: Sorghum.

When the grain used in the present invention contains sorghum, the content of sorghum in the grain of the present invention is generally 1 - 10 wt% relative to the grain used in the present invention and, from the aspects of nutrition composition, property and easiness of eating, preferably 6 - 8 wt%, more preferably 6.4 - 7.4 wt%.

When the grain used in the present invention contains soybean and sorghum, the weight ratio of the content of soybean and the content of sorghum (soybean:sorghum) in the grain used in the present invention is preferably 1:0.01 - 0.3, more preferably 1:0.08 - 0.2, from the aspects of nutrition composition, property and easiness of eating.

When the grain used in the present invention contains maize and sorghum, the weight ratio of the content of maize and the content of sorghum (maize:sorghum) in the grain used in the present invention is preferably 1:0.1 - 1, more preferably 1:0.4 - 0.8, from the aspects of nutrition composition, property and easiness of eating.

In one embodiment of the present invention, the amino acid-containing composition of the present invention is ingested in combination with 6 - 15 parts by weight, preferably 7 - 13 parts by weight, more preferably 7.5 - 12 parts by weight of grain per 1 part by weight of the composition. The content of the grain when the grain used in the present invention contains only one selected from the group consisting of soybean, maize and sorghum is the content thereof, and when the grain used in the present invention contains 2 or 3 selected from the group consisting of soybean, maize and sorghum, the content is the total of said 2 or 3.

The grain used in the present invention preferably contains all of soybean, maize and sorghum.

The grain (soybean, maize, sorghum) to be used in the present invention is preferably pulverized and used in the form of granule, powder or the like, from the aspects of properties and easiness of eating.

When the amino acid-containing composition of the present invention containing lysine or a salt thereof, methionine or a salt thereof, glutamine or a salt thereof, and proline or a salt thereof is ingested in combination with the grain containing at least one selected from the group consisting of soybean, maize and sorghum, the weight ratio of the content of grain and the content of lysine or a salt thereof (grain:lysine or a salt thereof) is preferably 1:0.0015 - 0.025, more preferably 1:0.005 - 0.015, from the aspect of protein/amino acid nutrition.

When the amino acid-containing composition of the present invention containing lysine or a salt thereof, methionine or a salt thereof, glutamine or a salt thereof, and proline or a salt thereof is ingested in combination with the grain containing at least one selected from the group consisting of soybean, maize and sorghum, the weight ratio of the content of grain and the content of glutamine or a salt thereof (grain:glutamine or a salt thereof) is preferably 1:0.0015 - 0.04, more preferably 1:0.006 - 0.017, from the aspect of protein/amino acid nutrition.

When the amino acid-containing composition of the present invention containing lysine or a salt thereof, methionine or a salt thereof, glutamine or a salt thereof, and proline or a salt thereof is ingested in combination with the grain containing at least one selected from the group consisting of soybean, maize and sorghum, the weight ratio of the content of grain and the content of methionine or a salt thereof (grain:methionine or a salt thereof) is preferably 1:0.0002 - 0.015, more preferably 1:0.001 - 0.0065, from the aspect of protein/amino acid nutrition.

When the amino acid-containing composition of the present invention containing lysine or a salt thereof, methionine or a salt thereof, glutamine or a salt thereof, and proline or a salt thereof is ingested in combination with the grain containing at least one selected from the group consisting of soybean, maize and sorghum, the weight ratio of the content of grain and the content of proline or a salt thereof (grain:proline or a salt thereof) is preferably 1:0.003 - 0.04, more preferably 1:0.006 - 0.025, from the aspect of protein/amino acid nutrition.

When the amino acid-containing composition of the present invention containing lysine or a salt thereof, methionine or a salt thereof, glutamine or a salt thereof, and proline or a salt thereof is ingested in combination with the grain containing at least one selected from the group consisting of soybean, maize and sorghum, the weight ratio of the content of grain and the content of glycine or a salt thereof (grain:glycine or a salt thereof) is preferably 1:0.003 - 0.025, more preferably 1:0.005 - 0.013, from the aspect of protein/amino acid nutrition.

The amino acid-containing composition of the present invention may further contain, in addition to the above-mentioned starting materials, other starting material. While such other starting material is not particularly limited as long as it does not impair the object of the present invention, for example, trace nutrient (vitamin, mineral) other than Fe, Zn, VitC and VitA, and the like can be mentioned.

The amino acid-containing composition of the present invention may be ingested in combination with oil in addition to the grain. Oil can be one of the energy sources, and the amino acid-containing composition of the present invention combined with oil can take a form permitting easy ingestion even without water.

While the oil usable for the present invention is not particularly limited as long as it is edible, palm oil, palm kernel oil, palmolein, palm stearin, olive oil, soybean oil, rape seed oil, almond oil, safflower oil, sunflower oil, corn oil, avocado oil, cottonseed oil and the like can be recited as examples.

In one embodiment of the present invention, the amino acid-containing composition of the present invention is ingested in combination with 2.5 - 12 parts by weight, preferably 3 - 10 parts by weight, more preferably 3.5 - 8 parts by weight, of oil per 1 part by weight of the composition.

The amino acid-containing composition of the present invention may be ingested in combination further with sugar in addition to the grain. Sugar can be one of the energy sources, and the amino acid-containing composition of the present invention combined with sugar is easily ingested by infants.

While the sugar usable for the present invention is not particularly limited as long as it is edible, sucrose, maltose, lactose, glucose, fructose, galactose and the like can be recited as examples.

In one embodiment of the present invention, the amino acid-containing composition of the present invention is ingested in combination with 2 - 10 parts by weight, preferably 3 - 8 parts by weight, more preferably 4 - 6 parts by weight, of sugar per 1 part by weight of the composition.

While the amino acid-containing composition of the present invention may or may not be ingested in combination with milk, it is preferable not to use milk from an economic aspect so that the composition can be provided at a low cost in developing regions. In the present invention, "milk" is a concept including a liquid secreted from the mammary gland of a female mammal (e.g., cow, goat, etc.) and a product group obtained by processing the liquid. Specific examples of the milk include raw milk, cows milk, raw goat milk, sterilized goat milk, composition-adjusted milk, low-fat milk, fat-free milk, cream, butter, butter oil, cheese, concentrated whey, concentrated milk, concentrated skim milk, evaporated milk, evaporated skim milk, sweetened condensed milk, sweetened condensed skim milk, powdered whole milk, dried skim milk, cream powder, whey powder, protein concentrated whey powder, powdered buttermilk, sweetened powdered milk, formulated powdered milk, fermented milk and the like.

The production method of the amino acid-containing composition of the present invention is not particularly limited, and can be produced by a method known per se. For example, the amino acid-containing composition of the present invention can be produced by pulverizing given amounts of lysine or a salt thereof, glutamine or a salt thereof, methionine or a salt thereof, and proline or a salt thereof, and glycine or a salt thereof when desired each into a powder, mixing them, adding iron, zinc, Vitamin C and Vitamin A, and other components (micronutrients) and mixing them and the like.

While the form of the amino acid-containing composition of the present invention is not particularly limited, a solid or semi-solid form (including paste form and slurry form) is preferable. The amino acid-containing composition of the present invention is preferably in the form of a powder since it is easily blended with other starting materials.

The amino acid-containing composition of the present invention can be provided as a food by mixing with grain, oil, sugar and the like which are preferably ingested in combination (hereinafter to be also referred to as the food of the present invention). From the aspect of convenience, the food of the present invention is preferably a food that can be ingested as it is without cooking.

The production method of the food of the present invention is not particularly limited, and can be produced by a method known per se. For example, the food of the present invention can be produced by pulverizing grain, lysine or a salt thereof, glutamine or a salt thereof, methionine or a salt thereof, and proline or a salt thereof (optionally glycine or a salt thereof) each into a powder, mixing them, adding oil and kneading the mixture and the like.

The calorific value per 100 g of the food of the present invention is preferably 520 to 550 kcal.

The food of the present invention can be provided as a packaged product. The packaging material that can be used for packaging the food of the present invention is not particularly limited as long as it is usually used for packaging foods, and examples thereof include aluminum foil and the like. The weight per packaged food of the present invention (excluding the weight of packaging material) is usually 90 to 98 g, preferably 90 - 95 g.

The amino acid-containing composition of the present invention and the food of the present invention can be ingested by a mammal (e.g., human, bovine, horse, dog, cat, monkey, mouse, rat etc.) to prevent or improve malnutrition. A preferable targets of the present invention are humans including children and adults, particularly infants, in malnutrition (particularly acute malnutrition) condition due to starvation, HIV, malaria, tuberculosis, diarrhea, fever and the like, or vegetarians with no (less) ingestion of animal-derived protein or those with insufficient nutrition due to excessive diet. In the present specification, the "infant" refers to children from 6 months to 5 years in age.

"Malnutrition" in the context of the present invention refers to an abnormal state of the body caused by a shortage of food intake or an imbalance between demand and supply of one or more nutrients, and is a concept including both acute malnutrition and chronic malnutrition.

As a specific criterion for determining malnutrition, for example, in a human, when the Weight for Height Z score (WHZ), which is an index of the body weight per height, is not more than -2 and/or Middle Upper Arm Circumstance (MUAC) is not more than 125 mm, the human is judged as malnourished.

In the present invention, "prevention" of malnutrition refers to preventing or delaying malnutrition, and "improvement" of malnutrition means to get out of malnutrition, treat or alleviate the symptoms of malnutrition partly or entirely, or prevent or delay the exacerbation of the symptoms of malnutrition.

Specific examples of the symptoms of malnutrition include anemia and the like. In chronic malnutrition, for example, symptoms such as anemia and the like can be confirmed chronically.

The amino acid-containing composition and the food of the present invention can be preferably used for the prophylaxis or improvement of severe and moderate acute malnutrition among malnutrition.

As a specific criterion for determining severe acute malnutrition, for example, in a human, when a Weight for Heart Z score (WHZ), which is an index of body weight per height, is not more than -3 and/or a Middle Upper Arm Circumstance (MUAC) is not more than 115 mm, the human is judged to have severe acute malnutrition, and WHZ is between -3 and -2, and MUAC is not more than 125 mm, the human is judged to have moderate acute malnutrition.

While the ingestion amount of the amino acid-containing composition of the present invention varies depending on the kind, age, nutritional state and the like of an animal that ingests, when, for example, be ingested by malnourished infants as a food mixed with grains and oil, it is generally not less than 200 kcal/kg/day, and this amount is preferably ingested in 1 to 5 (preferably 2 to 4) portions per day.

The food of the present invention can be preferably used as a Ready-to-Use Therapeutic Food.

### Examples

The present invention is explained in more detail in the following by referring to Examples; however, the present invention is not limited by the following Examples.

### Production Example 1 (amino acid-containing composition)

Each component was mixed in the composition described in Table 1 to give the amino acid-containing composition of the present invention.

**[Table 1]**

| | Nutrient | Unit | Amount per 3.995 g premix |
|---|---|---|---|
| Micronutrients | ***Minerals*** | | |
| | Iron, Fe | mg | 22.1 |
| | Zinc, Zn | mg | 18.5 |
| | Others^{*1} | | q.s. |
| | ***Vitamines*** | | |
| | Vitamin C | mg | 320.0 |
| | Vitamin A | µg | 969.1 |
| | Others^{*2} | | q.s. |
| Amino acids | L-Lysine | mg | 304.2 |
| | Glutamine | mg | 500.0 |
| | L-Methionine | mg | 115.0 |
| | L-Proline | mg | 500.0 |
| Excipient | Maltodextrin | | q.s. |

| | | | |
|---|---|---|---|
| ^{*1} minerals other than Fe and Zn (e.g., Ca, P, K, Na, Cu, Se, I) ^{*2} vitamines other than Vitamins C and A (e.g., Thiamin, Riboflavin, Niacin, Pantothenic acid, Vitamins B6, B12, E, D and K, Folate, Biotin) | | | |

### Production Example 2 (FSMS RUTF)

| | | |
|---|---|---|
| 1) | soybean | 28.50 parts by weight |
| 2) | maize | 5.50 parts by weight |
| 3) | sorghum | 3.50 parts by weight |
| 4) | defatted soybean | 8.50 parts by weight |
| 5) | palm oil | 23.50 parts by weight |
| 6) | palm stearin | 4.00 parts by weight |
| 7) | sugar | 22.50 parts by weight |
| 8) | lysine hydrochloride | 0.380 parts by weight |
| 9) | glutamine | 0.500 parts by weight |
| 10) | methionine | 0.120 parts by weight |
| 11) | proline | 0.500 parts by weight |
| 12) | Micronutrients | 2.50 parts by weight |
| total | | 100 parts by weight |

| | | |
|---|---|---|
| 1) - 4) were mixed, 7) was added and they were preliminarily mixed. 5) and 6) were mixed, a half amount of a mixture of 1) - 4) and 7) was added and mixed therewith, 8) - 12) were added and they were mixed, and finally, the rest of the mixture of 1) - 4) and 7) was added and mixed. | | |

Micronutrients contain iron (0.02 parts by weight), zinc (0.19 parts by weight), Vitamin C (0.32 parts by weight) and Vitamin A (0.001 part by weight).

### Production Example 3 (MSMS RUTF)

| | | |
|---|---|---|
| 1) | soybean | 9.42 parts by weight |
| 2) | maize | 6.60 parts by weight |
| 3) | sorghum | 3.40 parts by weight |
| 4) | defatted soybean | 14.08 parts by weight |
| 5) | dry skim milk | 9.30 parts by weight |
| 6) | palm oil | 30.46 parts by weight |
| 7) | palm stearin | 2.00 parts by weight |
| 8) | sugar | 20.50 parts by weight |
| 9) | lysine hydrochloride | 0.320 parts by weight |
| 10) | glutamine | 0.400 parts by weight |
| 11) | L-methionine | 0.075 parts by weight |
| 12) | glycine | 0.075 parts by weight |
| 13) | L-proline | 0.370 parts by weight |
| 14) | Micronutrients | 3.00 parts by weight |
| total | | 100 parts by weight |

| | | |
|---|---|---|
| 1) - 4) were mixed, 8) was added and they were preliminarily mixed. 6) and 7) were mixed, a half amount of a mixture of 1) - 4) and 8) was added and mixed therewith, 5) and 9) - 14) were added and they were mixed, and finally, the rest of the mixture of 1) - 4) and 7) was added and mixed. | | |

Micronutrients contain iron, zinc, Vitamin C and Vitamin A.

### Reference Production Example 1 (PM RUTF)

| | | |
|---|---|---|
| 1) | dry skim milk | 25.00 parts by weight |
| 2) | Peanut paste | 23.00 parts by weight |
| 3) | Canola oil | 5.00 parts by weight |
| 4) | palm oil | 11.00 parts by weight |
| 5) | palm stearin | 4.00 parts by weight |
| 6) | Myverol | 1.00 parts by weight |
| 7) | sugar | 29.40 partd by weight |
| 8) | Micronutrients | 1.60 parts by weight |
| total | | 100 parts by weight |

| | | |
|---|---|---|
| 1) - 2) were mixed, 7) was added and they were preliminarily mixed. 3) - 6) were mixed, a half amount of a mixture of 1) - 2) and 7) was added and mixed therewith, and 8) was added and they were mixed, and finally, the rest of the mixture of 1) - 2) and 7) was added and mixed. | | |

### Example 1

### (Human study)

The human study was a three arms statistician blinded, randomized and controlled, parallel group, efficacy non-inferiority trial.

### <Subject>

The children aged 6 to 59 months with SAM (severe acute malnutrition) were recruited in this study. The number of SAM children allocated for PM-RUTF (milk-peanuts type RUTF as control; Reference Production Example 1) treatment group was 474. The number of SAM children allocated for MSMS-RUTF (low milk content Soya-Maize-Sorghum RUTF; Production Example 3) treatment group was 441. The number of SAM children allocated for FSMS-RUTF (milk free Soya-Maize-Sorghum RUTF; Production Example 2) treatment group was 486.

The study was carried out in the Central Region of Malawi at 21 different health centres distributed in 3 districts. The enrolled children attended the each site daily from 9 a.m. to 3 p.m. and were treated with any one of the three types of RUTFs (MSMS, FSMS and P-RUTF).

### <Treatment>

The children took any one of the three RUTFs (MSMS, FSMS and P-RUTF) by fee-feeding (200kcal/kg/day at least). The three types of RUTFs were respectively ingested in the same manner as in the national guidelines for the treatment of SAM, except that the day-care approach, which was called CMAM (Community based Management of Acute Malnutrition), was used. The ingestions of RUTFs were continued around 2 months until achieving discharge criteria.

### <Admission and discharge criteria>

Admission and discharge criteria in this study were following (Table 2).

**[Table 2]**

| | |
|---|---|
| Admission | MUAC < 115 mm |
| | Bilateral pitting oedema grade + or ++ |
| | WFH Z-score <- 3 (WHO 2006 curves) |
| Discharge | Absence of bilateral pitting oedema for 14 successive days |
| | MUAC>=125 mm for 14 successive days |
| | Absence of acute life threatening infection |

### <Measurement>

Anthropometric parameters (weight and MUAC; Middle Upper Arm Circumstance) were measured each day.

### <Calculation of recovery rate>

Subjects who had MUAC (Middle Upper Arm Circumstance) of not less than 115 mm for 2 weeks or more were judged to have recovered from malnutrition, and the ratio of the number of subjects who recovered from malnutrition relative to the total number of subjects was calculated (recovery rate).

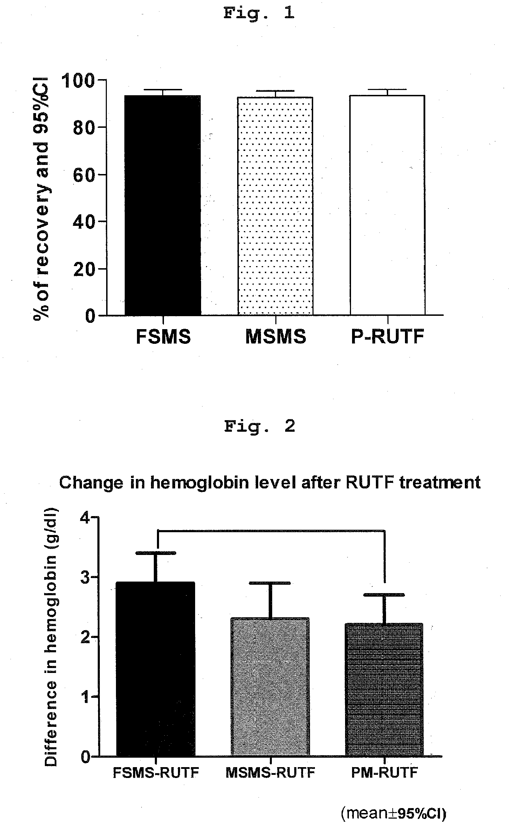

The results are shown in Fig. 1. The test subjects who dropped out from the test were excluded from the results.

From the results shown in Fig. 1, it was confirmed that the food of the present invention (FSMS-RUTF and MSMS-RUTF) has a malnutrition improvement effect which were not inferior to that of PM-RUTF by Per Protocol analysis.

### Example 2

### (Human study)

Blood was taken on admission and at discharge from CMAM in the Example 1. Blood variables of anemia (haemoglobin, haematocrit and full blood count) were measured on admission and at discharge from CMAM.

To conduct statistical analyses of results, student's t-test for paired or unpaired data, Kruskal-Wallis test between arm differences were utilized.

### <Haemoglobin level>

Table 3 and Fig. 2 show the effect of treatment on haemoglobin level in anemic and non-anemic SAM children. In anemic SAM children, each RUTF treatment recovered anemia, with FSMS-RUTF being the most effective treatment.

**[Table 3] Effect of treatment on haemoglobin levels in anemic and non-anemic SAM children across study arms**

| | **Category** | ***n*** | **Admission Hb mean (SD)** | ***n*** | **Discharge Hb mean (SD)** | **Difference, Δ(95%CI)** | **p-value** |
|---|---|---|---|---|---|---|---|
| All | FSMS-RUTF | 134 | 11.0 (2.0) | 83 | 12.1 (1.2) | 1.1 (0.6; 1.6) | <0.001 |
| | MSMS-RUTF | 109 | 10.5 (2.1) | 77 | 11.8 (1.2) | 1.3 (0.7; 1.8) | <0.001 |
| | PM-RUTF | 149 | 10.7 (1.79) | 106 | 11.6 (1.2) | 0.9 (0.5; 1.4) | <0.001 |
| | p-value | | 0.879 | | 0.132 | | |
| Anemic | FSMS-RUTF | 58 | 9.1 (1.3) | 38 | 12.1 (1.1) | 2.9 (2.4; 3.4) | <0.001 |
| | MSMS-RUTF | 59 | 9.1 (1.4) | 40 | 11.4 (1.5) | 2.3 (1.8; 2.9) | <0.001 |
| | PM-RUTF | 72 | 9.0 (1.4) | 45 | 11.2 (1.2) | 2.2 (1.7; 2.7) | <0.001 |
| | p-value | | 0.863 | | 0.007 | | |
| Non-anemic | FSMS-RUTF | 72 | 12.5 (1.1) | 43 | 12.2 (1.2) | -0.2 (-0.7; 0.2) | 0.29 |
| | MSMS-RUTF | 48 | 12.3 (0.9) | 35 | 11.2 (0.8) | -0.1 (-0.5; 0.3) | 0.553 |
| | PM-RUTF | 77 | 12.2 (0.7) | 59 | 11.9 (1.1) | -0.3 (-0.6; 0.0) | 0.074 |

It was found that all three tested types of RUTF products recovered haemoglobin level in anemia, but FSMS-RUTF product was significantly more efficacious in treating anemia.

## Claims

1. An amino acid-containing composition comprising lysine or a salt thereof, methionine or a salt thereof, glutamine or a salt thereof and proline or a salt thereof at the following concentrations and iron, zinc, Vitamin C and Vitamin A:
lysine or a salt thereof: 0.25 - 75 wt%,
methionine or a salt thereof: 0.025 - 75 wt%,
glutamine or a salt thereof: 0.25 - 75 wt%,
proline or a salt thereof: 0.25 - 75 wt%.

2. The amino acid-containing composition according to claim 1, further comprising glycine or a salt thereof at the following concentration:
glycine or a salt thereof: 0.025 - 75 wt%.

3. The amino acid-containing composition according to claim 1 or 2, wherein the iron, zinc, Vitamin C and Vitamin A are contained at the following concentrations:
iron: 0.2 - 1 wt%
zinc: 0.2 - 0.8 wt%
Vitamin C: 2 - 20 wt%
Vitamin A: 0.01 - 0.1 wt%.

4. The amino acid-containing composition according to any one of claims 1 to 3 for ingestion in combination with grain.

5. The amino acid-containing composition according to claim 4, wherein the grain is used in an amount of 6 - 15 parts by weight per 1 part by weight of the composition.

6. The amino acid-containing composition according to claim 4 or 5, wherein the grain comprises at least one kind selected from the group consisting of soybean, maize and sorghum.

7. The amino acid-containing composition according to any one of claims 4 to 6, wherein the grain comprises soybean, maize and sorghum.

8. The amino acid-containing composition according to any one of claims 1 to 7 for the prophylaxis or improvement of malnutrition in infants.

9. The amino acid-containing composition according to claim 8, wherein the malnutrition is acute malnutrition.

10. The amino acid-containing composition according to claim 8 or 9, wherein the malnutrition is accompanied by anemia.

11. The amino acid-containing composition according to any one of claims 1 to 7 for the prophylaxis or improvement of anemia symptoms.

12. The amino acid-containing composition according to any one of claims 1 to 7 for use in the prophylaxis or improvement of malnutrition in infants.

13. The amino acid-containing composition according to claim 12, wherein the malnutrition is acute malnutrition.

14. The amino acid-containing composition according to claim 12 or 13, wherein the malnutrition is accompanied by anemia.

15. The amino acid-containing composition according to any one of claims 1 to 7 for use in the prophylaxis or improvement of anemia symptoms.
